# EUROPÄISCHE PATENTANMELDUNG

(11) **EP 3 184 219 A1**
(43) Veröffentlichungstag der Anmeldung: **28.06.2017**
(21) Anmeldenummer: 15202125.9
(22) Anmeldetag: 22.12.2015
(51) Int. Cl.: B23B 51/04

(54) **BOHRKRONE**

(71) Anmelder: HILTI Aktiengesellschaft, 9494 Schaan (LI)
(72) Erfinder: Hoop, Matthaeus, 9492 Eschen (LI)
(74) Vertreter: Hilti Aktiengesellschaft Corporate Intellectual Property

(57) **Zusammenfassung**

Bohrkrone (10), die um eine Bohrachse (22) antreibbar ist, aufweisend einen Schneidabschnitt (11) mit einem Ringabschnitt (16) und einem oder mehreren Schneidsegmenten (17), einen Bohrschaftabschnitt (12) mit einem zylinderförmigen Bohrschaft (18) und einem Kupplungsstück (19) und einen Aufnahmeabschnitt (13) mit einem Kupplungsgegenstück (20) und einem Einsteckende (21). Das Kupplungsstück (19) weist eine durchgehende Innenbohrung mit einem Öffnungsdurchmesser auf, wobei der Öffnungsdurchmesser der Innenbohrung grösser als der Innendurchmesser des Bohrschaftes (18) ist.

## Beschreibung

### Technisches Gebiet

Die vorliegende Erfindung betrifft eine Bohrkrone gemäß dem Oberbegriff des Anspruchs 1.

### Stand der Technik

Bohrkronen bestehen aus mehreren Bohrkronenabschnitten, die als Schneidabschnitt, Bohrschaftabschnitt und Aufnahmeabschnitt ausgebildet sind. Der Schneidabschnitt umfasst einen Ringabschnitt und ein oder mehrere Schneidsegmente, die mit dem Ringabschnitt verschweißt, verlötet, verschraubt oder in einer anderen geeigneten Befestigungsart befestigt sind. Die Schneidsegmente sind ringförmig angeordnet und bilden in einer Ebene senkrecht zur Bohrachse einen Schneidring mit einem Innendurchmesser, einem Außendurchmesser und einer Segmentbreite. Der Bohrschaftabschnitt umfasst einen zylinderförmigen Bohrschaft, der in einer Ebene senkrecht zur Bohrachse eine Ringform mit einem Innendurchmesser, einem Außendurchmesser und einer Schaftbreite aufweist. Der Aufnahmeabschnitt umfasst einen Deckel und ein Einsteckende, über das die Bohrkrone in der Werkzeugaufnahme eines Kernbohrgerätes befestigt wird. Für die Größenverhältnisse zwischen dem Bohrschaft und dem Schneidring gilt, dass der Innendurchmesser des Bohrschaftes grösser als der Innendurchmesser des Schneidringes ist, der Außendurchmesser des Bohrschaftes kleiner als der Außendurchmesser des Schneidringes ist und die Schaftbreite des Bohrschaftes kleiner als die Segmentbreite des Schneidringes ist.

Der Bohrschaftabschnitt ist über eine erste Verbindung mit dem Aufnahmeabschnitt und über eine zweite Verbindung mit dem Schneidabschnitt verbunden. Die erste Verbindung und die zweite Verbindung können als lösbare Verbindungen oder als nicht-lösbare Verbindungen ausgebildet sein. Bekannt sind Bohrkronen mit einer lösbaren ersten und einer lösbaren zweiten Verbindung, Bohrkronen mit einer lösbaren ersten und einer nicht-lösbaren zweiten Verbindung, Bohrkronen mit einer nicht-lösbaren ersten und einer lösbaren zweiten Verbindung und Bohrkronen mit einer nicht-lösbaren ersten und einer nicht-lösbaren zweiten Verbindung. Bei Bohrkronen mit einer lösbaren zweiten Verbindung sind der Ringabschnitt und der Bohrschaft lösbar verbunden, beispielsweise über kombinierte Steck- und Stiftverbindungen mit einem losen Stiftelement, wie sie in WO 2013/093060 A1 beschrieben sind, oder über kombinierte Steck- und Stiftverbindungen mit einem festen Stiftelement, wie sie in WO 2014/096360 A1 und WO2014/096366 A1 beschrieben. Bei Bohrkronen mit einer nicht-lösbaren zweiten Verbindung können der Ringabschnitt und der Bohrschaft monolithisch ausgebildet sein und die gleichen Innen- und Außendurchmesser aufweisen; alternativ kann der Ringabschnitt stoffschlüssig mit dem Bohrschaft verbunden sein.

EP 0 314 123 B1 offenbart eine Bohrkrone mit einer lösbaren ersten Verbindung zwischen dem Bohrschaftabschnitt und dem Aufnahmeabschnitt. Der Bohrschaftabschnitt umfasst neben dem zylinderförmigen Bohrschaft ein Kupplungsstück, das mit dem Bohrschaft auf der dem Schneidabschnitt abgewandten Seite verbunden ist. Das Kupplungsstück umfasst eine durchgehende Innenbohrung mit einem Öffnungsdurchmesser und ein erstes Verbindungselement. Der Aufnahmeabschnitt umfasst neben dem Deckel und Einsteckende ein Kupplungsgegenstück, das ein zweites Verbindungselement aufweist. Das erste Verbindungselement des Kupplungsstücks und das zweite Verbindungselement des Kupplungsgegenstücks bilden die lösbare erste Verbindung der Bohrkrone, die als Bajonett-Verbindung ausgebildet ist. Die aus EP 0 314 123 B1 bekannte Bohrkrone weist Nachteile auf, wenn der Bohrkern in der Bohrkrone steckt und nach dem Kernbohren vom Bediener aus der Bohrkrone entfernt werden muss.

### Darstellung der Erfindung

Die Aufgabe der vorliegenden Erfindung besteht demgegenüber darin, eine Bohrkrone dahingehend weiterzuentwickeln, dass das Entfernen des Bohrkerns aus der Bohrkrone für den Bediener erleichtert ist.

Diese Aufgabe wird bei der eingangs genannten Bohrkrone erfindungsgemäß durch die Merkmale des unabhängigen Anspruchs 1 gelöst. Vorteilhafte Ausgestaltungen ergeben sich aus den abhängigen Ansprüchen.

Erfindungsgemäß ist vorgesehen, dass der Öffnungsdurchmesser der Innenbohrung des Kupplungsstücks grösser als der Innendurchmesser des Bohrschaftes ist, wobei die kleinste Abmessung der Innenbohrung als Öffnungsdurchmesser definiert ist. Bei der erfindungsgemäßen Bohrkrone ist die erste Verbindung zwischen dem Bohrschaftabschnitt und dem Aufnahmeabschnitt lösbar ausgebildet. Die lösbare erste Verbindung zwischen dem Kupplungsstück des Bohrschaftes und dem Kupplungsgegenstück des Aufnahmeabschnittes kann dazu genutzt werden, den Bohrkern aus der Bohrkrone zu entfernen.

Die erfindungsgemäße Bohrkrone umfasst einen Schneidabschnitt, der einen Ringabschnitt und ein oder mehrere Schneidsegmente aufweist, einen Bohrschaftabschnitt, der einen zylinderförmigen Bohrschaft und ein Kupplungsstück mit einer durchgehenden Innenbohrung aufweist, und einen Aufnahmeabschnitt, der ein Einsteckende und ein Kupplungsgegenstück aufweist. Der Schneidabschnitt umfasst ein einzelnes Schneidsegment, das einen geschlossenen Schneidring bildet, oder mehrere Schneidsegmente, die einen Schneidring mit Zwischenräumen bilden. Der zylinderförmige Bohrschaft weist in einer Ebene senkrecht zur Bohrachse eine Querschnittsform mit einem Außendurchmesser und einem Innendurchmesser auf. Der Bohrschaft kann ringförmig oder wellen-, trapez- oder zickzackförmig ausgebildet sein. Als Innen- und Außendurchmesser eines wellen-, trapez- oder zickzackförmigen Bohrschaftes sind die Durchmesser eines angrenzenden Innen- und Außenkreises definiert. Das Kupplungsstück weist ein erstes Verbindungselement und das Kupplungsgegenstück ein zweites Verbindungselement auf, wobei das erste und zweite Verbindungselement eine lösbare Verbindung bilden.

Die Schneidsegmente bilden den Schneidring mit einem Innendurchmesser und einem Außendurchmesser. Der Innendurchmesser des Schneidrings legt den Durchmesser des Bohrkerns und der Außendurchmesser des Schneidrings den Durchmesser des Bohrlochs fest. Um den Bohrkern aus der Bohrkrone zu entfernen, wird der Aufnahmeabschnitt vom Bohrschaftabschnitt entfernt und der Bohrkern durch das Kupplungsstück geschoben. Die Innenbohrung des Kupplungsstücks ist so gestaltet, dass der Öffnungsdurchmesser der Innenbohrung grösser als der Durchmesser des Bohrkerns ist. Um ein Verklemmen des Bohrkerns in der Innenbohrung zu verhindern, ist der Öffnungsdurchmesser der Innenbohrung grösser als der Innendurchmesser des Bohrschaftes. Die Möglichkeit, den Bohrkern von hinten aus der Bohrkrone zu entfernen, ist besonders vorteilhaft bei Bohrkronen, die eine nicht-lösbare zweite Verbindung zwischen dem Bohrschaftabschnitt und dem Schneidabschnitt aufweisen.

In einer bevorzugten Ausführung sind das Kupplungsgegenstück und das Einsteckende des Aufnahmeabschnittes einteilig ausgebildet. Die einteilige Ausbildung des Aufnahmeabschnittes bietet sich an, wenn eine Bohrkrone von Kernbohrgeräten mit einer einheitlichen Werkzeugaufnahme angetrieben werden soll. Ein einteiliger Aufnahmeabschnitt kann kompakter als ein mehrteiliger Aufnahmeabschnitt ausgebildet sein.

In einer alternativen bevorzugten Ausführung ist der Aufnahmeabschnitt mehrteilig aus einem ersten Adapter, der das Kupplungsgegenstück aufweist, und einem zweiten Adapter, der das Einsteckende aufweist, ausgebildet, wobei der erste und zweite Adapter über eine zweite lösbare Verbindung verbindbar sind. Die mehrteilige Ausbildung des Aufnahmeabschnittes aus einem ersten und zweiten Adapter hat den Vorteil, dass verschiedene Einsteckenden mit einer Bohrkrone kombiniert werden können oder das Einsteckende mit mehreren Bohrkronen verwendet werden kann. Die lösbare Verbindung zwischen dem ersten und zweiten Adapter bildet eine sogenannte logistische Schnittstelle, die beispielsweise als Gewindeverbindung ausgebildet ist. Die mehrteilige Ausbildung des Aufnahmeabschnittes bietet sich an, wenn eine Bohrkrone von Kernbohrgeräten mit unterschiedlichen Werkzeugaufnahmen angetrieben werden soll. Für jede Werkzeugaufnahme ist nur ein zweiter Adapter mit passendem Einsteckende erforderlich, beispielsweise ein zweiter Adapter für ein BI+-Einsteckende und ein zweiter Adapter für ein BL-Einsteckende.

In einer ersten bevorzugten Variante bilden das erste Verbindungselement des Kupplungsstücks und das zweite Verbindungselement des Kupplungsgegenstücks eine Bajonettverbindung. Eine Bajonettverbindung, die das Kupplungsstück des Bohrschaftabschnittes und das Kupplungsgegenstück des Aufnahmeabschnittes lösbar verbindet, hat den Vorteil, dass sich die Verbindung einfach und schnell öffnen und schließen lässt.

In einer zweiten bevorzugten Variante bilden das erste Verbindungselement des Kupplungsstücks und das zweite Verbindungselement des Kupplungsgegenstücks eine Gewindeverbindung. Eine Gewindeverbindung, die das Kupplungsstück des Bohrschaftabschnittes und das Kupplungsgegenstück des Aufnahmeabschnittes lösbar verbindet, hält auch großen Kräften und Drehmomenten stand.

Besonders bevorzugt ist die lösbare Verbindung zwischen dem ersten und zweiten Adapter des Aufnahmeabschnittes als Gewindeverbindung ausgebildet. Dabei weist der erste Adapter besonders bevorzugt ein Innengewinde und der zweite Adapter ein Außengewinde auf. Die lösbare Verbindung zwischen dem ersten und zweiten Adapter des Aufnahmeabschnittes bildet eine logistische Schnittstelle und ermöglicht die Kombination verschiedener erster und zweiter Adapter. Eine Gewindeverbindung, die den ersten und zweiten Adapter lösbar verbindet, hält auch großen Kräften und Drehmomenten stand.

In einer bevorzugten Ausführung sind der Bohrschaft aus einem ersten Material und das Kupplungsstück aus einem zweiten Material hergestellt. Die Auswahl eines geeigneten Materials für den Bohrschaft und das Kupplungsstück hängt unter anderem von den Belastungen des Bohrschaftes und des Kupplungsstücks ab. Die Verwendung von Kunststoff als Material bietet ein geringeres Gewicht als Stahl, hat aber den Nachteil einer geringeren Festigkeit. Der Bohrschaft und das Kupplungsstück können aus dem gleichen Material oder aus unterschiedlichen Materialien hergestellt sein.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine erste Ausführungsform einer erfindungsgemäße Bohrkrone mit einem Schneidabschnitt, einem Bohrschaftabschnitt und einem Aufnahmeabschnitt, der über eine lösbare Verbindung mit dem Bohrschaftabschnitt verbindbar ist;
- FIG. 2: einen Längsschnitt durch die erfindungsgemäße Bohrkrone der FIG. 1 entlang der Schnittlinie A-A in FIG. 1;
- FIG. 3: eine zweite Ausführungsform einer erfindungsgemäßen Bohrkrone mit einem Bohrschaftabschnitt und einem Aufnahmeabschnitt, der über eine lösbare Verbindung mit dem Bohrschaftabschnitt verbindbar ist; und
- FIG. 4: einen Längsschnitt durch die erfindungsgemäße Bohrkrone der FIG. 3 entlang der Schnittlinie A-A in FIG. 3.

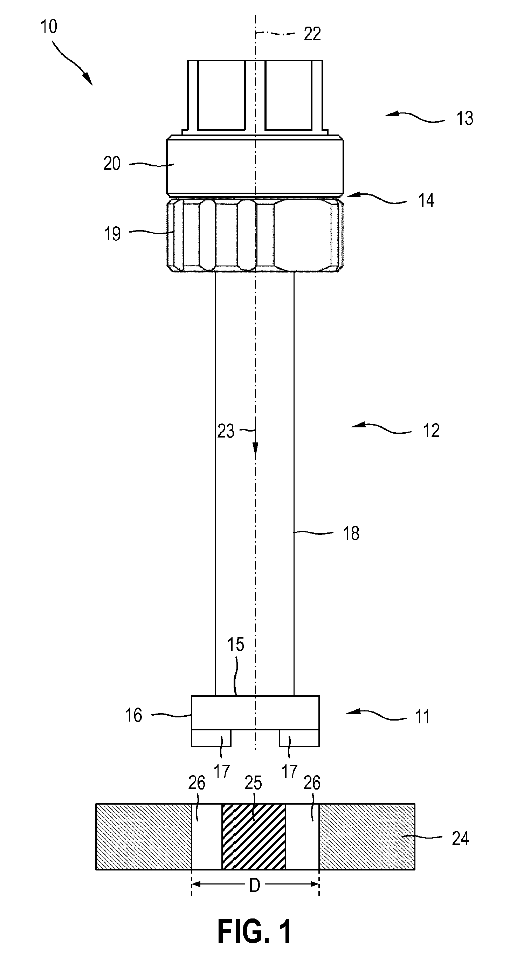

**FIG. 1** zeigt eine erste Ausführungsform einer erfindungsgemäßen Bohrkrone **10**, die einen Schneidabschnitt **11**, einen Bohrschaftabschnitt **12** und einen austauschbaren Aufnahmeabschnitt **13** aufweist. Der Bohrschaftabschnitt 12 ist über eine lösbare erste Verbindung **14** mit dem Aufnahmeabschnitt 13 verbunden und der Schneidabschnitt 11 ist über eine weitere Verbindung **15** mit dem Bohrschaftabschnitt 12 verbunden. Die weitere Verbindung 15 kann als lösbare oder nicht-lösbare Verbindung ausgebildet sein. Eine Verbindung wird als lösbar bezeichnet, wenn die Verbindung vom Anwender zerstörungsfrei gelöst werden kann, wie beispielsweise eine Steckverbindung, eine Stiftverbindung oder eine Gewindeverbindung. Eine Verbindung wird als nicht-lösbar bezeichnet, wenn der Anwender die Verbindung nur durch Zerstörung der Verbindungsmittel lösen kann, wie beispielsweise eine Lötverbindung, eine Schweißverbindung oder eine Klebeverbindung. FIG. 1 zeigt eine Bohrkrone, bei der die weitere Verbindung 15 als nicht-lösbare Verbindung ausgebildet ist.

Der Schneidabschnitt 11 umfasst einen Ringabschnitt **16** und mehrere Schneidsegmente **17**, die mit dem Ringabschnitt 16 verbunden sind. Die Schneidsegmente 17 sind mit dem Ringabschnitt 16 verschweißt, verlötet, verschraubt oder in einer anderen geeigneten Befestigungsart am Ringabschnitt 16 befestigt. Der Bohrschaftabschnitt 12 umfasst einen zylinderförmigen Bohrschaft **18** und ein Kupplungsstück **19,** das mit dem Bohrschaft 18 verbunden ist. Der Aufnahmeabschnitt 13 umfasst ein Kupplungsgegenstück **20** und ein Einsteckende **21**, über das die Bohrkrone 10 in einer Werkzeugaufnahme eines Kernbohrgerätes befestigt wird.

Der Bohrschaft 18 und das Kupplungsstück 19 können aus dem gleichen Material oder aus unterschiedlichen Materialien gefertigt sein. Die Auswahl eines geeigneten Materials für den Bohrschaft 18 und das Kupplungsstück 19 hängt unter anderem von den Belastungen des Bohrschaftes 18 und des Kupplungsstücks 19 ab. Die Verwendung von Kunststoff als Material bietet ein geringeres Gewicht als Stahl, hat aber den Nachteil einer geringeren Festigkeit.

Im Bohrbetrieb wird die Bohrkrone 10 vom Kernbohrgerät um eine Bohrachse **22** angetrieben und in einer Bohrrichtung **23** parallel zur Bohrachse 22 in das zu bearbeitende Werkstück **24** bewegt. Die Bohrkrone 10 erzeugt im Werkstück 24 einen Bohrkern **25** und ein Bohrloch **26** mit einem Bohrlochdurchmesser **D**. Die lösbare erste Verbindung 14 zwischen dem Kupplungsstück 19 des Bohrschaftabschnittes 12 und dem Kupplungsgegenstück 20 des Aufnahmeabschnittes 13 kann dazu genutzt werden, den Bohrkern 25 aus der Bohrkrone 10 zu entfernen. Um den Bohrkern 25 zu entfernen, wird der Aufnahmeabschnitt 13 vom Bohrschaftabschnitt 12 entfernt und der Bohrkern 25 durch das Kupplungsstück 19 geschoben.

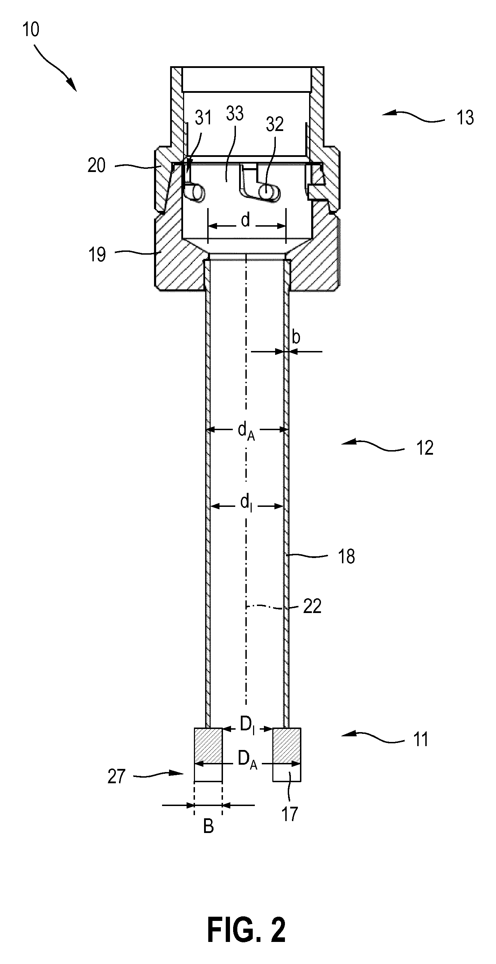

**FIG. 2** zeigt einen Längsschnitt durch die Bohrkrone 10 der FIG. 1 entlang der Schnittlinie A-A in FIG. 1. Die Bohrkrone 10 umfasst den Schneidabschnitt 11, den Bohrschaftabschnitt 12 und den Aufnahmeabschnitt 13, der über die lösbare erste Verbindung 14 mit dem Bohrschaftabschnitt 12 verbindbar ist. Die Schneidsegmente 17 bilden in einer Ebene senkrecht zur Bohrachse 22 einen Schneidring **27** mit einem Innendurchmesser **D_{I}**, einem Außendurchmesser **D_{A}** und einer Segmentbreite **B,** die als halbe Differenz aus dem Innen- und Außendurchmesser D_{I}, D_{A} des Schneidringes 27 berechnet wird.

Der Bohrschaft 18 weist in einer Ebene senkrecht zur Bohrachse 22 eine Ringform mit einem Innendurchmesser **d_{I}**, einem Außendurchmesser **d_{A}** und einer Schaftbreite b, die als halbe Differenz aus dem Innen- und Außendurchmesser d_{I}, d_{A} berechnet wird, auf. Für die Größenverhältnisse zwischen dem Bohrschaft 18 und dem Schneidring 27 gilt, dass der Innendurchmesser d_{I} des Bohrschaftes 18 grösser als der Innendurchmesser D_{I} des Schneidringes 27 ist, der Außendurchmesser d_{A} des Bohrschaftes 18 kleiner als der Außendurchmesser D_{A} des Schneidringes 27 ist und die Schaftbreite b des Bohrschaftes 18 kleiner als die Segmentbreite B des Schneidringes 27 ist.

Der Aufnahmeabschnitt 13 ist über die lösbare erste Verbindung 14 mit dem Bohrschaftabschnitt 12 verbunden. Das Kupplungsstück 19 des Bohrschaftabschnittes 12 weist ein erstes Verbindungselement **31** und das Kupplungsgegenstück 20 des Aufnahmeabschnittes 13 ein zweites Verbindungselement **32** auf. Das erste Verbindungselement 31 ist in Form von L-förmigen Schlitzen ausgebildet und das zweite Verbindungselement 32 ist in Form von Stiftelementen ausgebildet; das erste und zweite Verbindungselement 31, 32 bilden eine Bajonettverbindung. Das Kupplungsstück 19 weist neben dem ersten Verbindungselement 31 eine durchgehende Innenbohrung **33** mit einem Öffnungsdurchmesser **d** auf. Die Innenbohrung 33 ist im Ausführungsbeispiel aus mehreren Abschnitten zusammengesetzt und besteht aus einem zylinderförmigen Abschnitt und einem kegelstumpfförmigen Abschnitt. Als Öffnungsdurchmesser der Innenbohrung 33 ist die kleinste Abmessung der Innenbohrung 33 definiert.

Die lösbare erste Verbindung 14 zwischen dem Kupplungsstück 19 und dem Kupplungsgegenstück 20 kann dazu genutzt werden, den Bohrkern 25 aus der Bohrkrone 10 zu entfernen. Um den Bohrkern 25 zu entfernen, wird der Aufnahmeabschnitt 13 vom Bohrschaftabschnitt 12 entfernt und der Bohrkern 25 durch das Kupplungsstück 19 geschoben. Die Innenbohrung 33 des Kupplungsstücks 19 ist so gestaltet, dass der Öffnungsdurchmesser d grösser als der Durchmesser des Bohrkerns 25 ist. Um ein Verklemmen des Bohrkerns 25 in der Innenbohrung 33 zu verhindern, ist der Öffnungsdurchmesser d grösser als der Innendurchmesser d_{I} des Bohrschaftes 18.

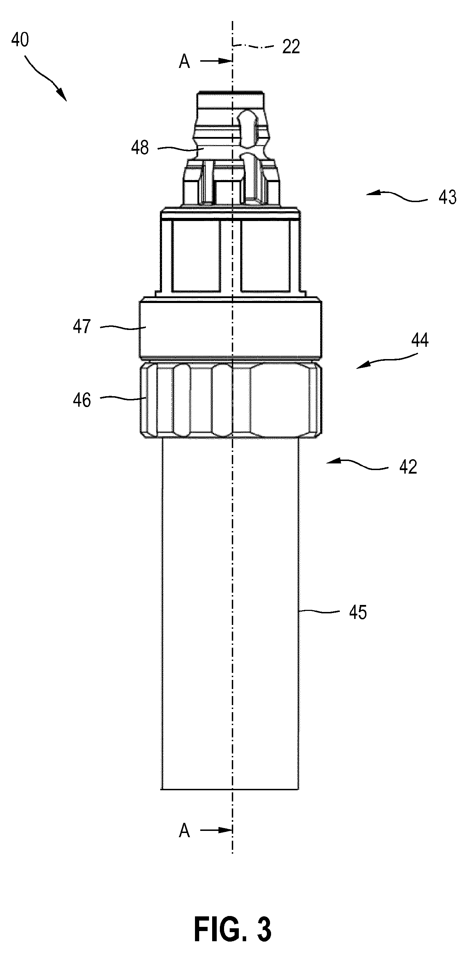

**FIG. 3** zeigt eine zweite Ausführungsform einer erfindungsgemäßen Bohrkrone **40,** die einen Bohrschaftabschnitt **42** und einen Aufnahmeabschnitt **43** aufweist. Der Bohrschaftabschnitt 42 ist über eine lösbare erste Verbindung **44** mit dem Aufnahmeabschnitt 43 verbindbar. Die lösbare erste Verbindung 44 ist als Bajonettverbindung ausgebildet; alternativ kann die lösbare erste Verbindung 44 als Gewindeverbindung oder andere geeignete lösbare Verbindung ausgebildet sein.

Der Bohrschaftabschnitt 42 umfasst einen zylinderförmigen Bohrschaft **45** und ein Kupplungsstück **46,** das mit dem Bohrschaft 45 verbunden ist. Der Aufnahmeabschnitt 43 umfasst ein Kupplungsgegenstück **47** und ein Einsteckende **48**. Die lösbare erste Verbindung 44 zwischen dem Kupplungsstück 46 des Bohrschaftabschnittes 42 und dem Kupplungsgegenstück 47 des Aufnahmeabschnittes 43 kann dazu genutzt werden, den Bohrkern 25 aus der Bohrkrone 40 zu entfernen. Um den Bohrkern 25 zu entfernen, wird der Aufnahmeabschnitt 43 vom Bohrschaftabschnitt 42 entfernt und der Bohrkern 25 durch das Kupplungsstück 46 geschoben.

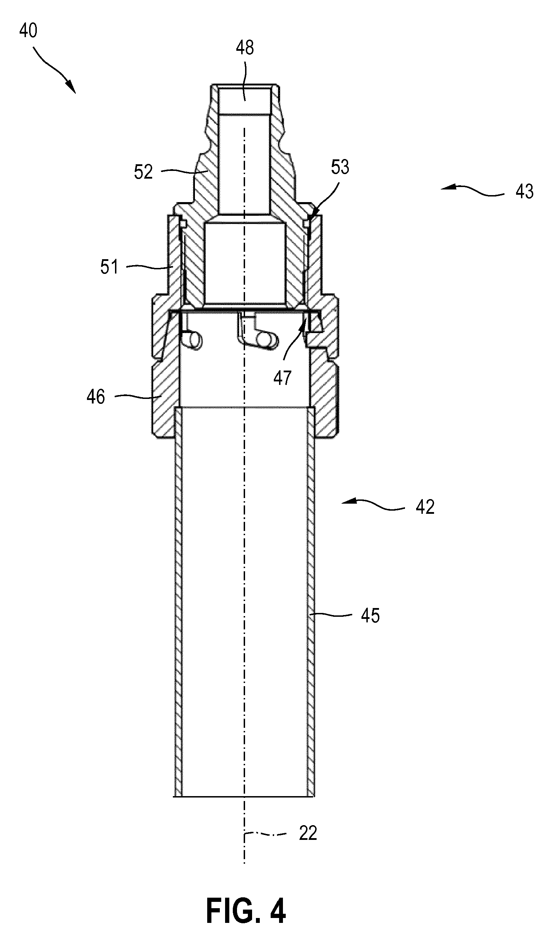

**FIG. 4** zeigt einen Längsschnitt durch die Bohrkrone 40 der FIG. 3 entlang der Schnittlinie A-A in FIG. 3. Die Bohrkrone 40 umfasst den Bohrschaftabschnitt 42 und den Aufnahmeabschnitt 43, der über die lösbare erste Verbindung 44 mit dem Bohrschaftabschnitt 42 verbindbar ist. Die Bohrkrone 40 unterscheidet sich im Aufbau des Aufnahmeabschnittes 43 von der Bohrkrone 10 der FIG. 1, ansonsten sind die Bohrkronen 10, 40 gleich aufgebaut.

Der Aufnahmeabschnitt 43 ist zweiteilig aus einem ersten Adapter **51** und einem zweiten Adapter **52** ausgebildet, die über eine lösbare Verbindung **53** verbindbar sind. Der erste Adapter 51 umfasst das Kupplungsgegenstück 47 und der zweite Adapter 52 umfasst das Einsteckende 48. Die lösbare Verbindung 53 zwischen dem ersten und zweiten Adapter 51, 52 ist als Gewindeverbindung ausgebildet und bildet eine logistische Schnittstelle zwischen dem ersten und zweiten Adapter 51, 52.

Ein mehrteiliger Aufnahmeabschnitt 43 hat den Vorteil, dass verschiedene Einsteckenden 48 mit einer Bohrkrone kombiniert werden können oder das Einsteckende 48 mit mehreren Bohrkronen verwendet werden kann. Die mehrteilige Ausbildung des Aufnahmeabschnittes 43 bietet sich an, wenn eine Bohrkrone von Kernbohrgeräten mit unterschiedlichen Werkzeugaufnahmen angetrieben werden soll. Für jede Werkzeugaufnahme ist ein zweiter Adapter 52 mit passendem Einsteckende 48 vorgesehen. Die Anzahl an benötigten ersten Adaptern 51 entspricht der Anzahl an unterschiedlichen Kupplungsstücken des Bohrschaftabschnittes 42. Alle zweiten Adapter 52 weisen die gleiche logistische Schnittstelle auf, so dass jeder erste Adapter 51 mit jedem zweiten Adapter 52 kombiniert werden kann.

## Patentansprüche

1. Bohrkrone (10; 40), die um eine Bohrachse (22) antreibbar ist, aufweisend:
▪ einen Schneidabschnitt (11) mit einem Ringabschnitt (16) und einem oder mehreren Schneidsegmenten (17), die in einer Ebene senkrecht zur Bohrachse (22) einen Schneidring (27) mit einem Außendurchmesser (D_{A}) und einem Innendurchmesser (D₁) bilden,
▪ einen Bohrschaftabschnitt (12; 42) mit einem zylinderförmigen Bohrschaft (18; 45), der in einer Ebene senkrecht zur Bohrachse (22) einen Außendurchmesser (d_{A}) und einen Innendurchmesser (d_{I}) aufweist, und einem Kupplungsstück (19; 46), das ein erstes Verbindungselement (31) und eine durchgehende Innenbohrung (33) mit einem Öffnungsdurchmesser (d) aufweist, wobei das Kupplungsstück (19; 46) mit dem Bohrschaft (18; 45) verbunden ist, und
▪ einen Aufnahmeabschnitt (13; 43), der ein Einsteckende (21; 48) und ein Kupplungsgegenstück (20; 47) mit einem zweiten Verbindungselement (32) aufweist, wobei das erste Verbindungselement (31) des Kupplungsstücks (19; 46) und das zweite Verbindungselement (32) des Kupplungsgegenstücks (20; 47) eine lösbare erste Verbindung (14; 44) bilden,
**dadurch gekennzeichnet, dass** der Öffnungsdurchmesser (d) der Innenbohrung (33) des Kupplungsstücks (19; 46) grösser als der Innendurchmesser (d_{I}) des Bohrschaftes (18; 45) ist.

2. Bohrkrone nach Anspruch 1, **dadurch gekennzeichnet, dass** das Kupplungsgegenstück (20) und das Einsteckende (21) des Aufnahmeabschnittes (13) einteilig ausgebildet sind.

3. Bohrkrone nach Anspruch 1, **dadurch gekennzeichnet, dass** der Aufnahmeabschnitt (43) mehrteilig aus einem ersten Adapter (51), der das Kupplungsgegenstück (47) aufweist, und einem zweiten Adapter (52), der das Einsteckende (48) aufweist, ausgebildet ist, wobei der erste und zweite Adapter (51, 52) über eine lösbare Verbindung (53) verbindbar sind.

4. Bohrkrone nach einem der Ansprüche 1 bis 3, **dadurch gekennzeichnet, dass** das erste Verbindungselement (31) des Kupplungsstücks (19; 46) und das zweite Verbindungselement (32) des Kupplungsgegenstücks (20; 47) eine Bajonettverbindung bilden.

5. Bohrkrone nach einem der Ansprüche 1 bis 3, **dadurch gekennzeichnet, dass** das erste Verbindungselement des Kupplungsstücks und das zweite Verbindungselement des Kupplungsgegenstücks eine Gewindeverbindung bilden.

6. Bohrkrone nach Anspruch 3, **dadurch gekennzeichnet, dass** die lösbare Verbindung (53) zwischen dem ersten und zweiten Adapter (51, 52) als Gewindeverbindung ausgebildet ist.

7. Bohrkrone nach Anspruch 1, **dadurch gekennzeichnet, dass** der Bohrschaft (18; 45) aus einem ersten Material und das Kupplungsstück (19; 46) aus einem zweiten Material hergestellt ist.
